# EUROPÄISCHE PATENTSCHRIFT

(11) **EP 2 041 520 B1**
(45) Veröffentlichungstag und Bekanntmachung des Hinweises auf die Patenterteilung: **20.01.2010**
(21) Anmeldenummer: 07725208.8
(22) Anmeldetag: 15.05.2007
(51) Int. Cl.: G01D 5/347, G01B 5/00, G01D 11/20

(54) **POSITIONSMESSEINRICHTUNG ZUR BESTIMMUNG DER LAGE ZWEIER RELATIV ZUEINANDER BEWEGLICHER BAUTEILE**
POSITION MEASURING DEVICE FOR DETERMINING THE POSITION OF TWO COMPONENTS DISPLACEABLE RELATIVE TO ONE ANOTHER
DISPOSITIF DE MESURE DE POSITION POUR LA DÉTERMINATION DE LA POSITION DE DEUX COMPOSANTS MOBILES L'UN PAR RAPPORT À L'AUTRE

(30) Priorität: 04.07.2006 DE 102006031756
(43) Veröffentlichungstag der Anmeldung: 01.04.2009
(73) Patentinhaber: Dr. Johannes Heidenhain GmbH, 83301 Traunreut (DE)
(72) Erfinder: MAYER, Reinhard, 83278 Traunstein (DE)
(86) Internationale Anmeldenummer: PCT/EP2007/004289
(87) Internationale Veröffentlichungsnummer: WO 2008/003367

(56) Entgegenhaltungen:
- EP-A- 1 522 826
- EP-A- 1 798 527
- DE-A1- 10 109 909
- DE-A1- 10 330 955
- GB-A- 2 162 646

## Beschreibung

Die Erfindung betrifft eine Positionsmesseinrichtung zur Bestimmung der Lage zweier relativ zueinander beweglicher Bauteile nach dem Oberbegriff des Patentanspruchs 1.

Eine derartige Positionsmesseinrichtung umfasst eine entlang einer Messrichtung verlaufende Messteilung, z. B. in Form eines längserstreckten Maßstabes; einen die Messteilung tragenden Trägerkörper; eine die Messteilung abtastende Abtasteinrichtung, z. B. in Form eines Abtastkopfes, der in definiertem Abstand zu der Messteilung entlang der Messrichtung beweglich geführt ist; einen Montagefuß der Abtasteinrichtung zugeordneten Befestigungsmitteln zum Befestigen der Abtasteinrichtung an einem der zueinander beweglichen Bauteile; sowie eine Transportsicherung, mit der der Montagefuß bzw. die Abtasteinrichtung insgesamt in einer Transportposition an dem Trägerkörper festlegbar ist.

Bei den zueinander beweglichen Bauteilen kann es sich um zwei Maschinenbauteile, wie z. B. den Schlitten und das zugehörige Bett einer Werkzeugmaschine handeln, wobei der Trägerkörper zusammen mit der Messteilung einerseits und der Montagefuß als Bestandteil der Abtasteinrichtung andererseits an jeweils einem der beiden Maschinenbauteile befestigt werden.

Die der Positionsmesseinrichtung zugeordnete Transportsicherung dient dazu, beim Transport und bei der Montage der Positionsmesseinrichtung deren Montagefuß in einer definierten Position (Solllage) am Trägerkörper der Messeinrichtung festzulegen, die besonders vorteilhaft für den Einbau in die zugehörige Werkzeugmaschine ist, so dass die Abtasteinrichtung beim Einbau in dieser vorgebbaren Position am Trägerkörper gehalten wird.

Eine solche Transportsicherung (Sicherungsvorrichtung) für eine Positionsmesseinrichtung ist aus der DE 199 18 654 A1 bekannt. Die bekannte Transportsicherung umfasst mindestens einen entlang einer Führungsbahn des Trägerkörpers der Positionsmesseinrichtung verschiebbaren Grundkörper, der am Trägerkörper durch Klemmkräfte fixierbar ist, um den Montagefuß in einer Solllage bezüglich des Trägerkörpers festzulegen, sowie ein am Grundkörper der Transportsicherung vorgesehenes, einen Betätigungsabschnitt aufweisendes Bedienelement zum Einleiten und zum Aufheben der Klemmkräfte, mittels derer die Transportsicherung an dem Trägerkörper der Messteilung festklemmbar ist. Als Bedienelement dient konkret eine Stellschraube mit einem zur Betätigung durch ein Werkzeug vorgesehenen Schraubenkopf. Hierbei kann jedoch der Nachteil auftreten, dass die Stellschraube nach der Montage der Positionsmesseinrichtung an einer Werkzeugmaschine für ein zugeordnetes Betätigungswerkzeug nur schwer zugänglich ist, etwa weil vorspringende Kanten der Werkzeugmaschine den für Montagearbeiten zur Verfügung stehenden Platz stark begrenzen.

Zur Behebung dieses Nachteiles ist es aus der DE 101 09 909 C2 bekannt, das der Transportsicherung zugeordnete Bedienelement so auszubilden, dass der zur Betätigung des Bedienelementes vorgesehene Betätigungsabschnitt über eine dem Trägerkörper der Positionsmesseinrichtung abgewandte, von einem äußeren Rand seitlich begrenzte Oberfläche des Grundkörpers der Transportsicherung seitlich hinausragt, wenn der Grundkörper der Transportsicherung an dem Trägerkörper fixiert ist, so dass der Betätigungsabschnitt des Bedienelementes zum Einleiten und/oder Aufheben der Klemmkräfte seitlich des Grundkörpers betätigbar ist. Hierdurch soll die Zugänglichkeit des Betätigungsabschnittes des Bedienelementes nach Einbau der Positionsmesseinrichtung in eine Werkzeugmaschine oder dergleichen erleichtert werden, um die feste Verbindung zwischen der Abtasteinrichtung/dem Montagefuß einerseits und dem Trägerkörper der Positionsmesseinrichtung andererseits ohne Schwierigkeiten aufheben zu können. Denn erst nach dem Lösen dieser Verbindung steht die Positionsmesseinrichtung für eine Längenmessung zur Verfügung, bei der ja die Abtasteinrichtung zusammen mit dem Montagefuß bezüglich des Trägerkörpers entlang der Messrichtung bewegt wird.

Hiervon ausgehend liegt der Erfindung das Problem zugrunde, eine Positionsmesseinrichtung der eingangs genannten Art hinsichtlich der Montagefreundlichkeit weiter zu verbessern.

Dieses Problem wird erfindungsgemäß durch die Schaffung einer Positionsmesseinrichtung mit den Merkmalen des Patentanspruchs 1 gelöst.

Danach ist gemäß einem Aspekt der Erfindung die Transportsicherung derart ausgebildet und die Befestigungsmittel, über die der Montagefuß an einem der beiden zueinander beweglichen Bauteile zu befestigen ist, sind derart mit der Transportsicherung gekoppelt, dass bei einer Betätigung der Befestigungsmittel in der Weise, dass der Montagefuß an einem der zueinander beweglichen Bauteile befestigt wird, die Transportsicherung automatisch gelöst wird und der Montagefuß somit (für spätere Positionsmessungen) zusammen mit der Abtasteinrichtung entlang der Messrichtung relativ zu dem Trägerkörper bewegbar ist.

Alternativ oder ergänzend ist die Transportsicherung gemäß einem zweiten Aspekt der Erfindung derart ausgebildet und mit den Befestigungsmitteln des Montagefußes derart gekoppelt, dass die Transportsicherung automatisch aktiviert (d.h., am Trägerkörper fixiert) und somit die Abtasteinrichtung an dem Trägerkörper der Positionsmesseinrichtung festgelegt wird, wenn die Befestigungsmittel (der in eine Werkzeugmaschine eingebauten Positionsmesseinrichtung) zum Lösen der Befestigung des Montagefußes an dem zugeordneten Bauteil betätigt werden, so dass die Abtasteinrichtung (also insbesondere auch der Montagefuß) nicht entlang der Messrichtung (bezüglich des Trägerkörpers) beweglich ist.

Besonders bevorzugt ist die Transportsicherung derart ausgebildet und mit den Befestigungsmitteln des Montagefußes derart gekoppelt, dass die Transportsicherung einerseits automatisch gelöst wird, wenn der Montagefuß an einem zugeordneten Bauteil befestigt wird, sowie andererseits automatisch aktiviert (d.h., am Trägerkörper fixiert) wird, wenn die Befestigungsmittel zum Lösen der Befestigung des Montagefußes an dem zugeordneten Bauteil betätigt werden.

Der erste Aspekt der erfindungsgemäßen Lösung hat den Vorteil, dass zum Lösen der Transportsicherung beim Einbau der Positionsmesseinrichtung in eine Werkzeugmaschine - durch Befestigung des Montagefußes an einem Maschinenbauteil einerseits und des Trägerkörpers an einem anderen Maschinenbauteil andererseits - keine zusätzlichen Arbeitsschritte erforderlich sind. Vielmehr erfolgt das Lösen der Transportsicherung automatisch beim Befestigen des Montagefußes der Transportsicherung an dem zugeordneten Maschinenbauteil. Dies ist genau der Zeitpunkt, zu dem die Haltefunktion der Transportsicherung nicht mehr benötigt wird, da nach einer Befestigung des Montagefußes einerseits und des Trägerkörpers andererseits am jeweils zugeordneten Bauteil jene beiden Komponenten der Positionsmesseinrichtung eindeutig zueinander positioniert sind und deren Relativposition im Weiteren (zur Positionsmessung) jeweils von der Position jener beiden Bauteile zueinander abhängen soll.

Die Koppelung zwischen den Befestigungsmitteln des Montagefußes und der Transportsicherung schränkt weder die Möglichkeiten hinsichtlich der Verwendung geeigneter Befestigungsmittel zur Befestigung des Montagefußes an einem zugeordneten Bauteil noch die Möglichkeiten hinsichtlich der Verwendung geeigneter Verbindungsmittel zur Fixierung der Transportsicherung am Trägerkörper ein. Es ist vielmehr lediglich erforderlich, den zur Kopplung der Befestigungsmittel des Montagefußes mit der Transportsicherung vorgesehenen Koppelmechanismus so auszulegen, dass er an die verwendeten montagefußseitigen Befestigungsmittel einerseits und transportsicherungsseitigen Verbindungsmittel andererseits angepasst ist.

So können als dem Montagefuß zugeordnete Befestigungsmittel zur Befestigung des Montagefußes (zusammen mit der zugehörigen Abtasteinrichtung) an einem Bauteil (Maschinenbauteil) weiterhin, wie auch bisher üblich, Befestigungsschrauben verwendet werden. Es ist lediglich erforderlich, den Koppelmechanismus so auszubilden, dass bei einer Betätigung der verwendeten Befestigungsmittel, z. B. in Form mindestens einer Befestigungsschraube, eine Einwirkung auf die Transportsicherung erfolgt.

Letztere kann wiederum in bekannter Weise kraftschlüssig (mittels Klemmkräften) am Trägerkörper fixierbar sein, um die Abtasteinrichtung (zusammen mit deren Montagefuß) in einer definierten Position am Trägerkörper zu halten. Dies ermöglicht insbesondere eine stufenlose Festlegbarkeit der Abtasteinrichtung am Trägerkörper in einer beliebigen Position.

Gemäß dem zweiten Aspekt der Erfindung wird die Abtasteinrichtung zusammen mit ihrem Montagefuß automatisch wieder in einer definierten Position am Trägerkörper festgelegt, wenn beim Ausbau der Positionsmesseinrichtung aus einer Werkzeugmaschine die zur Befestigung des Montagefußes an einem zugeordneten Bauteil dienenden Befestigungsmittel gelöst werden.

Gemäß einer besonders bevorzugten Ausführungsform der Erfindung ist die Transportsicherung am Montagefuß der Abtasteinrichtung verliersicher (ortsfest) angeordnet, insbesondere in eine am Montagefuß vorgesehene Aufnahme integriert. Hierdurch verbleibt die Transportsicherung (im gelösten Zustand) auch nach der Befestigung des Montagefußes an einem zugeordneten Bauteil dauerhaft am Montagefuß und kann bei einem späteren Lösen der Befestigung zwischen Montagefuß und zugeordnetem Bauteil (z.B. um die Positionsmesseinrichtung aus der zugeordneten Werkzeugmaschine auszubauen) erneut zur Festlegung von Montagefuß und Abtasteinrichtung am Trägerkörper der Positionsmesseinrichtung verwendet werden, wie oben beschrieben.

Zur kraftschlüssigen Fixierung der (am Montagefuß angeordneten) Transportsicherung am Trägerkörper, um hierdurch die Abtasteinrichtung zusammen mit ihrem Montagefuß (in einer beliebigen Solllage) am Trägerkörper festlegen zu können, kann mindestens ein Krafteinleitungselement der Transportsicherung vorgesehen sein, welches kraftschlüssig auf den Trägerkörper einwirkt, um die Transportsicherung am Trägerkörper zu fixieren.

Gemäß einer vorteilhaften Ausführungsform der Erfindung weist die Transportsicherung eine Spannvorrichtung auf, mittels der die Transportsicherung (mit Ihrem mindestens einen Krafteinleitungselement) gegen den Trägerkörper der Positionsmesseinrichtung verspannt wird, insbesondere in einer in Messrichtung erstreckten Führungsnut des Trägerkörpers. Hierzu kann die Spannvorrichtung ein elastisches Element (Federelement) aufweisen, welches derart vorgespannt ist, dass es die Tendenz hat, die Transportsicherung bzw. deren Krafteinleitungselement am Trägerkörper zu verspannen.

Dieses elastische Element wirkt derart auf das der Transportsicherung zugeordnete Krafteinleitungselement ein, das dieses gegen den Trägerkörper bzw. genauer gegen einen Wandabschnitt der am Trägerkörper vorgesehenen Führungsnut gedrückt wird. Das mindestens eine Krafteinleitungselement kann hierzu durch einen schwenkbar gelagerten Hebel gebildet werden, der mittels des Federelementes in Richtung auf den Trägerkörper vorgespannt ist. Besonders bevorzugt sind zwei Krafteinleitungselemente als Bestandteile jeweils eines schwenkbar gelagerten Verstellhebels vorgesehen, zwischen denen das elastische Element aufgenommen ist und die vom elastischen Element gegen den Trägerkörper, beispielsweise gegen jeweils einen Wandabschnitt der Führungsnut des Trägerkörpers, gedrückt werden.

Bei Verwendung einer solchen Spannvorrichtung zur Fixierung der Transportsicherung am Trägerkörper sind die montagefußseitigen Befestigungsmittel derart mit jener Spannvorrichtung gekoppelt, dass beim Betätigen der Befestigungsmittel zur Befestigung des Montagefußes an einem zugeordneten Bauteil die Spannvorrichtung entgegen ihrer Spannwirkung in einen Zustand überführt wird, in der sie vom Trägerkörper gelöst ist, z. B. durch Deformation des der Spannvorrichtung zugeordneten elastischen Elementes.

Weiterhin ist die Kopplung der montagefußseitigen Befestigungsmittel mit der Spannvorrichtung vorteilhaft derart ausgeführt, dass bei einem Lösen der Befestigungsmittel, um den Montagefuß vom zugeordneten Bauteil abzunehmen, die Einwirkung auf die Spannvorrichtung wieder aufgehoben wird und diese automatisch (unter der Wirkung des zugeordneten elastischen Elementes) wieder in einen Zustand übergeht, in dem sie am Trägerkörper fixiert ist.

Der Koppelmechanismus, der eine Bewegung der montagefußseitigen Befestigungsmittel zur Befestigung des Montagefußes an dem einen der zueinander bewegbaren Bauteile in eine Einwirkung auf die Transportsicherung umsetzt, so dass die Transportsicherung gelöst wird, umfasst gemäß einer Ausführungsform der Erfindung mindestens ein Getriebeelement, z. B. in Form eines Schwenkhebels, welches eine Bewegung der Befestigungsmittel, z. B. eine Längsbewegung eines Befestigungselementes in Form einer Befestigungsschraube, in eine Schwenkbewegung umsetzt und welches ausgangsseitig mit einem schwenkbar gelagerten Verstellelement verbunden ist, welches die vom schwenkbar gelagerten Getriebeelement (Schwenkhebel) erzeugte Schwenkbewegung auf die Spannvorrichtung überträgt, um diese zu lösen.

Zur Einwirkung der Befestigungsmittel, z. B. eines Befestigungselementes in Form einer Schraube, auf jenes Getriebeelement beim Betätigen des besagten Befestigungselementes, kann dem Befestigungselement eine Stellhülse zugeordnet sein, welche bei einer Längsbewegung des Befestigungselementes mitgenommen wird und hierbei auf das Getriebeelement einwirkt. Dieses setzt dann wiederum die von der Stellhülse übertragene Längsbewegung des Befestigungselementes in eine Schwenkbewegung um, die auf die Spannvorrichtung übertragen wird, um die Spannvorrichtung zu lösen, wenn das Befestigungselement zur Befestigung des Montagefußes am zugeordneten Bauteil betätigt wird.

Weitere Einzelheiten und Vorteile der Erfindung werden bei der nachfolgenden Beschreibung eines Ausführungsbeispiels anhand der Figuren deutlich werden.

Es zeigen:

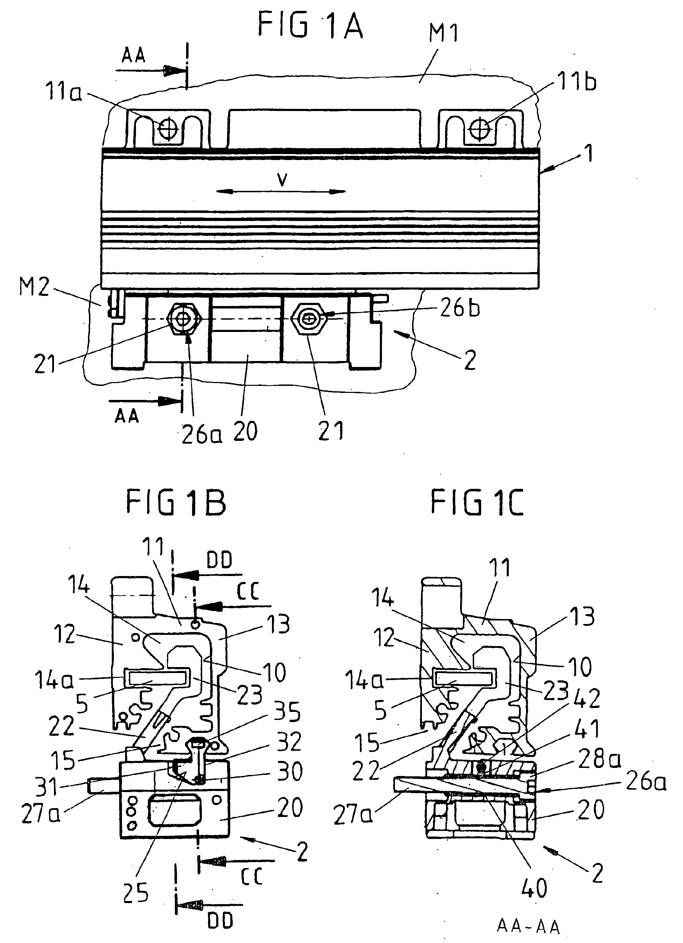

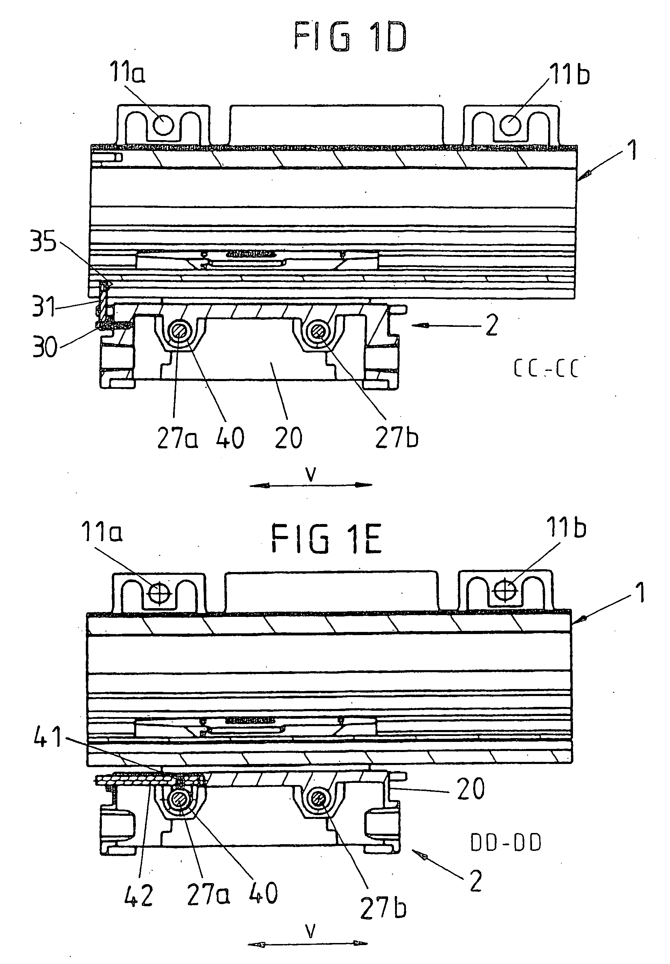

- Figur 1a: eine Seitenansicht einer Positionsmesseinrichtung zur Bestimmung der Lage zweier zueinander beweglicher Bauteile;
- Figur 1b: eine Ansicht der Positionsmesseinrichtung aus Fig. 1a von einer Stirnseite her;
- Figur 1 c: einen Querschnitt durch die Positionsmesseinrichtung aus den Figuren 1a und 1b;
- Figur 1d: einen ersten Längsschnitt durch die Positionsmesseinrichtung aus den Figuren 1a und 1b;
- Figur 1e: einen zweiten Längsschnitt durch die Positionsmesseinrichtung aus den Figuren 1a und 1b;
- Figur 2: ein Detail der Positionsmesseinrichtung aus den Figuren 1a bis 1e;
- Figur 3a: eine perspektivische Darstellung eines Ausschnittes der Positionsmesseinrichtung aus den Figuren 1a bis 1e zur Darstellung einer Transportsicherung, mittels derer eine Abtasteinrichtung der Positionsmesseinrichtung an einem Trägerkörper der Positionsmesseinrichtung festlegbar ist;
- Figur 3b: eine weitere perspektivische Darstellung gemäß Fig. 3a, jedoch ohne einen Montagefuß der Abtasteinrichtung, um einzelne Komponenten der Transportsicherung sowie eines zugeordneten Koppelmechanismus besser erkennbar zu machen.

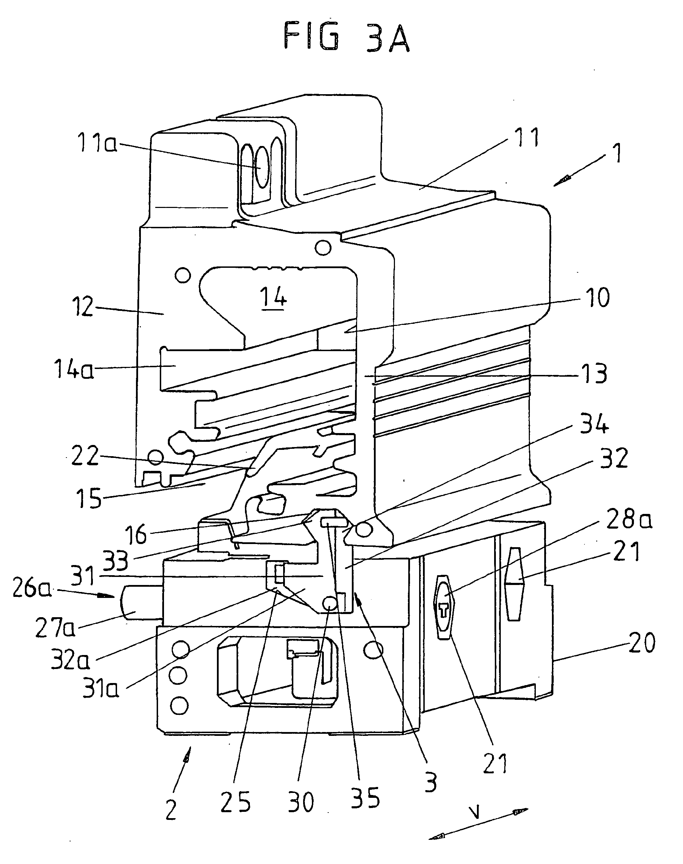

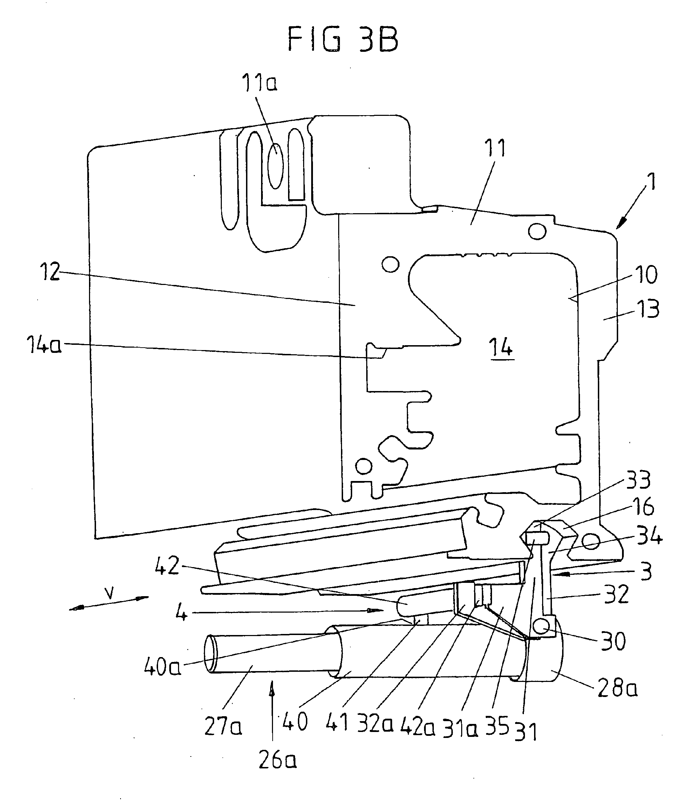

In den Figuren 1a bis 1e, 2 sowie 3a und 3b ist eine Positionsmesseinrichtung zur Bestimmung der Lage (Relativposition) zweier relativ zueinander beweglicher Bauteile einer Werkzeugmaschine (Maschinenbauteile M1 und M2) dargestellt, die einen Trägerkörper 1, eine Abtasteinrichtung 2 und eine Transportsicherung 3 umfasst, mit der die Abtasteinrichtung 2 in einer definierten Solllage am Trägerkörper 1 festgelegt und gehalten werden kann.

Gemäß den Figuren 1a bis 1e, 2 sowie 3a und 3b besteht der Trägerkörper 1 aus einem längserstreckten Hohlprofil 10 mit einer Basis 11, von der einerseits zwei Befestigungslaschen mit Befestigungsöffnungen 11a, 11b und andererseits zwei seitliche Schenkel 12, 13 abstehen. Dieses Hohlprofil 10 umschließt einen inneren Hohlraum 14, der eine Aufnahme 14a für eine (optisch abtastbare) entlang einer Messrichtung erstreckte, nur in den Figuren 1b und 1c gezeigte Messteilung 5 bildet. Das Hohlprofil wird üblicherweise an seinen beiden stirnseitigen Enden jeweils mit einem seitlichen Abschlusselement versehen und ist über die als Montagestellen dienenden Befestigungsöffnungen 11a, 11b an einem Maschinenbauteil M1, wie zum Beispiel dem Schlitten einer Werkzeugmaschine, befestigbar.

Innerhalb des Hohlprofils 10 ist längsverschieblich der ebenfalls nur in den Figuren 1b und 1c gezeigte Abtastwagen 23 einer Abtasteinrichtung 2 angeordnet, der zum Abtasten der Messteilung 5 einen Messkopf aufweist, der beispielsweise mit einer Lichtquelle, einem Linsensystem und zugeordneten Fotoelementen bestückt ist. Der Abtastwagen ist entlang einer Verschieberichtung V, die mit der Messrichtung - also der Erstreckungsrichtung der Messteilung 5 des Trägerkörpers 1 - zusammenfällt, längsverschieblich an der Positionsmesseinrichtung (zum Beispiel an einem die Messteilung bildenden Maßstab) gelagert. Ferner ist der Abtastwagen - zumindest entlang der Verschieberichtung V starr - über einen (einen Schlitz 15 des Trägerkörpers 1 durchgreifenden) Mitnehmer 22 mit einem außerhalb des von dem Hohlprofil 10 umschlossen Hohlraumes 14 angeordneten Montagefuß 20 der Abtasteinrichtung 2 verbunden, der zur Befestigung der Abtasteinrichtung 2 an einem zweiten Maschinenbauteil M2, wie zum Beispiel dem Bett der oben erwähnten Werkzeugmaschine, dient. Hierzu weist der Montagefuß 20 Befestigungsöffnungen 21 auf, die von je einem Befestigungselement 26a, 26b in Form einer Befestigungsschraube mit einem Schaft 27a bzw. 27b und einem Kopf 28a bzw. 28b durchgriffen werden.

Eine solche Messeinrichtung, mit der eine Längenmessung entlang der Mess- und Verschieberichtung V durchführbar ist, um die Lage der beiden Maschinenbauteile M1, M2 zueinander zu bestimmen, ist allgemein bekannt, vergleiche das Fachbuch "Digitale Längen- und Winkelmesstechnik" von Alfons Ernst, Landsberg/Lech (1998), Seiten 48 bis 53, und braucht daher hier nicht näher erläutert zu werden.

Anhand der Figuren 1a bis 1e, 2 sowie 3a und 3b ist weiterhin erkennbar, dass der Positionsmesseinrichtung eine Transportsicherung 3 zugeordnet ist, die in einer Aufnahme 25 des Montagefußes 20 angeordnet und dadurch dauerhaft (verliersicher) mit dem Montagefuß 20 verbunden ist. Diese Transportsicherung 3 ist, wie nachfolgend näher erläutert werden wird, in beliebigen Positionen - entlang der Verschieberichtung V betrachtet - an dem Trägerkörper 1 fixierbar und dient so zur Festlegung des Montagefußes 20 der Abtasteinrichtung 2 an dem Trägerkörper 1 in einer vorgebbaren Solllage.

Die Transportsicherung 3 umfasst eine am Montagefuß 20 vorgesehene Schwenkachse 30, um die zwei Verstellhebel 31, 32 schwenkbar gelagert sind. Die beiden Verstellhebel 31, 32 weisen an ihren der Schwenkachse 30 abgewandten Enden jeweils ein Krafteinleitungselement 33 bzw. 34 auf; die beiden Krafteinleitungselemente 33, 34 sind in einer entlang der Mess- und Verschieberichtung V erstreckten (an einem freien Ende eines der Schenkel 12, 13 ausgebildeten) Führungsnut 16 des Trägerkörpers 1 entlang jener Mess- und Verschieberichtung V längsverschieblich geführt. Die Krafteinleitungselemente 33, 34 der beiden Verstellhebel 31, 32 sind mittels eines zwischen den beiden Krafteinleitungselementen aufgenommenen elastischen Elementes 35 in Form eines Federelementes (nach außen) in Richtung auf jeweils einen Wandabschnitt der Führungsnut 16 verspannt, so dass sie unter Vorspannung an je einem jener (einander gegenüberliegenden) Wandabschnitte der Führungsnut 16 anliegen. Hierdurch ist die Transportsicherung 3 unter der Wirkung der Vorspannung des elastischen Elementes 35 mittels einer Klemmverbindung kraftschlüssig in ihrer jeweiligen Position innerhalb der Führungsnut 16 fixiert. Da die Transportsicherung 3 verliersicher in einer Aufnahme 25 des Montagefußes 20 angeordnet ist, bedeutet dies, dass der Montagefuß 20 und somit die Abtasteinrichtung 2 insgesamt mittels der Transportsicherung 3 in einer beliebigen Solllage - bezogen auf die Mess- und Verschieberichtung V - am Trägerkörper 1, genauer in dessen Führungsnut 16, kraftschlüssig festlegbar und haltbar ist.

Hierdurch können der Trägerkörper 1 mit der zugeordneten Messteilung einerseits und die den Montagefuß 20 und den Abtastwagen umfassende Abtasteinrichtung 2 andererseits vor dem Einbau der Positionsmesseinrichtung in eine Werkzeugmaschine in einer definierten, für die Montage vorteilhaften Position zueinander ausgerichtet und in dieser Position beim Transport zu der zugehörigen Werkzeugmaschine sowie bei der anschließenden Montage gehalten werden.

Nach Abschluss der Montagearbeiten, also nach dem Einbau der Positionsmesseinrichtung in eine Werkzeugmaschine sollen dann aber natürlich die Abtasteinrichtung 2 und der Trägerkörper 1 entlang der Mess- und Verschieberichtung V zueinander beweglich sein, damit durch Abtastung der dem Trägerkörper 1 zugeordneten Messteilung mittels des der Abtasteinrichtung 2 zugeordneten Abtastkopfes die relative Lage der beiden Maschinenbauteile M1, M2 der entsprechenden Werkzeugmaschine zueinander kontinuierlich bestimmt werden kann. Hierzu ist ein Koppelmechanismus 4 vorgesehen, über den die zur Befestigung des Montagefußes 20 am zugeordneten Maschinenbauteil M2 vorgesehenen Befestigungsmittel 26a, 26b in Form von Befestigungsschrauben derart mit der Transportsicherung 3 gekoppelt sind, dass bei einer Betätigung der Befestigungsmittel 26a, 26b zur Befestigung des Montagefußes 20 am zugeordneten Maschinenbauteil M2 die kraftschlüssige (Klemm-) Verbindung zwischen der Transportsicherung 3 und dem Trägerkörper 1 der Positionsmesseinrichtung aufgehoben wird.

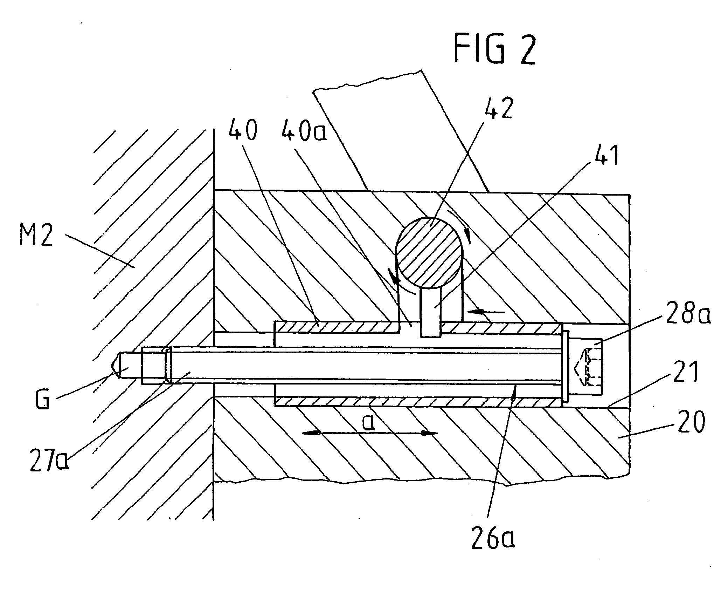

Der Koppelmechanismus 4 ist vorgesehen zur Kopplung eines der Befestigungsmittel 26a, 26b, nämlich einer Befestigungsschraube 26a, mit der durch die beiden Krafteinleitungselemente 33, 34 und das elastische Element 35 gebildeten Spannvorrichtung, mit der die Transportsicherung 3 kraftschlüssig in der Führungsnut 16 verspannbar ist. Der Koppelmechanismus 4 umfasst hierzu eine Stellhülse 40, die den Schaft 27a der einen Befestigungsschraube 26a umschließt und die bei einer Längsbewegung der Befestigungsschraube 26a, während diese zur Befestigung des Montagefußes 20 am zugeordneten Maschinenbauteil M2 in eine Gewindebohrung G eingeschraubt wird, vom Schraubenkopf 28a in axialer Richtung a des Schaftes 27a mitgenommen wird, vergleiche Figur 2.

Die Stellhülse 40 weist eine Öffnung 40a auf, in die ein als Getriebeelement dienender Schwenkhebel 41 (in Form eines schwenkbar gelagerten Stiftes) mit seinem freien Ende eingreift, der an seinem anderen Ende mit einer drehbare am Montagefuß 20 gelagerten, sich in Mess- und Verstellrichtung V erstreckenden Welle 42 verbunden ist. Die Welle 42 ist mit einem Betätigungsabschnitt 42a versehen, der zwischen zwei Fortsätze 31a, 32a der beiden Verstellhebel 31, 32 der Transportsicherung 3 greift. Dieser Betätigungsabschnitt 42a ist (im Unterschied zu den übrigen Bereichen der Welle 42) nicht rotationssymmetrisch ausgebildet, vorliegend speziell im Querschnitt rechteckförmig.

Wird die eine Befestigungsschraube 26a der montagefußseitigen Befestigungsmittel 26a, 26b zur Befestigung des Montagefußes 20 am zugeordneten Maschinenbauteil M2 betätigt, um die Befestigungsschraube 26a in eine Gewindebohrung G des Maschinenbauteiles M2 einzuschrauben, so führt die Befestigungsschraube 26a hierbei - zusätzlich zu einer Drehbewegung - eine Längsbewegung in axialer Richtung a aus. Bei dieser Bewegung wird die den Schaft 27a der Befestigungsschraube 26a umgreifende Stellhülse 40 vom Schraubenkopf 28a in axialer Richtung a mitgenommen und wirkt hierbei auf das freie Ende des in die (Übermaß bezüglich des Querschnittes des Schwenkhebels 41 aufweisende) Öffnung 40a der Stellhülse 40 eingreifenden Schwenkhebels 41. Hierbei wird das freie Ende des (zur Umwandlung einer Längsbewegung der Befestigungsschraube 26a in eine Drehbewegung der Welle 42 dienenden) Schwenkhebels 41 in axialer Richtung a mitgenommen und der Schwenkhebel 41 ausgelenkt, so dass die am anderen Ende des Schwenkhebels 41 vorgesehene, drehbar am Montagefuß 20 gelagerte Welle 42 eine entsprechende Drehbewegung (im Uhrzeigersinn) ausführt, wie in Figur 2 anhand der Pfeile dargestellt. Hierbei wird der Betätigungsabschnitt 42a der Welle 42 mitgenommen, welcher auf die Fortsätze 31 a, 32a der beiden Verstellhebel 31, 32 einwirkt und eine derartige Schwenkbewegung der beiden Verstellhebel 31, 32 bewirkt, dass deren Krafteinleitungselemente 33, 34 - entgegen der Vorspannkraft des elastischen Elementes 35 - vom jeweils zugeordneten Wandabschnitt der Führungsnut 16 abgehoben werden. Hierdurch ist die kraftschlüssige Fixierung der durch die Krafteinleitungselemente 33, 34 und das elastische Element 35 gebildeten Spannvorrichtung und somit der Transportsicherung 3 insgesamt in der Führungsnut 16 aufgehoben, so dass auch die Abtasteinrichtung 2 bzw. deren Montagefuß 20 nicht mehr am Trägerkörper 1 festgelegt ist. Die Abtasteinrichtung 2 ist dann bezüglich des Trägerkörpers 1 entlang der Mess- und Verschieberichtung V beweglich, um den Umfang von Relativbewegungen der beiden Maschinenbauteile M1, M2 erfassen zu können, von denen das eine Maschinenbauteil M1 dem Trägerkörper 1 und das andere Maschinenbauteil M2 der Abtasteinrichtung 2 zugeordnet ist. Die nunmehr von dem Trägerkörper gelöste Transportsicherung 3 verbleibt dabei in der hierfür vorgesehenen Aufnahme 25 des Montagefußes 20.

Soll zu einem späteren Zeitpunkt die Positionsmesseinrichtung aus der zugeordneten Werkzeugmaschine ausgebaut werden, indem der Trägerkörper 1 und die Abtasteinrichtung 2 vom jeweils zugeordneten Maschinenbauteil M1 bzw. M2 abgenommen werden, so bedeutet dies insbesondere, dass die eine Befestigungsschraube 26a der Befestigungsmittel 26a, 26b gelöst werden muss. Hierbei führt die Befestigungsschraube 26a eine Längsbewegung in axialer Richtung a aus, die der Bewegung beim Eindrehen der Befestigungsschraube 26a in die zugeordnete Gewindebohrung G genau entgegengesetzt ist. Während der Längsbewegung der Befestigungsschraube 26a wird die den Schaft 27a der Befestigungsschraube 26a umgreifende Stellhülse 40 von dem Schwenkhebel 41 in Richtung der Längsbewegung mitgenommen, da der Schwenkhebel 41 beim Lösen der Befestigungsschraube unter der Wirkung des vorgespannten elastischen Elementes 35 in Richtung auf seine Ausganglage (vor dem Eindrehen der Befestigungsschraube 26a) zurückgeschwenkt wird. D.h., der mit seinem freien Ende in die Öffnung 40a der Stellhülse 40 eingreifende Schwenkhebel 41 kehrt wieder in seine Ursprungslage - die er vor der Befestigung des Montagefußes 20 am zugeordneten Maschinenbauteil M2 eingenommen hatte - zurück. Dies bedingt eine entsprechende Drehbewegung der mit dem Schwenkhebel 41 verbundenen Welle 42 sowie von deren Betätigungsabschnitt 42a, so dass die beiden Krafteinleitungselemente 33, 34 der Verstellhebel 31, 32 nicht mehr entgegen der Wirkung des elastischen Elementes 35 vom jeweils zugeordneten Wandabschnitt der Führungsnut 16 abgehoben sind. Die beiden Krafteinleitungselemente 33, 34 legen sich dann unter der Vorspannung des elastischen Elementes 35 wieder an jeweils einen Wandabschnitt der Führungsnut 16 an, so dass die Transportsicherung 3 wieder kraftschlüssig in der Führungsnut 16 festgeklemmt ist. Somit ist die Abtasteinrichtung 2 insgesamt am Trägerkörper 1 festgelegt, was einen gemeinsamen Transport und eine gemeinsame Handhabung dieser beiden Komponenten der Positionsmesseinrichtung nach dem Ausbau aus einer Werkzeugmaschine ermöglicht.

Das Profil bzw. die Kontur der Wand der Führungsnut 16 ist dabei im Querschnitt so gestaltet, dass die beiden Krafteinleitungselemente 33, 34 gegen einander gegenüberliegende, jeweils abgewinkelte Wandabschnitte der Führungsnut 16 gedrückt werden. Die äußere Kontur der Krafteinleitungselemente 33, 34 ist hierzu an die Kontur der Innenwand der Führungsnut 16 angepasst.

Im Ergebnis sind das Fixieren der Transportsicherung 3 und damit das Festlegen der Abtasteinrichtung 2 am Trägerkörper 1 sowie das Deaktivieren der Transportsicherung 3 und damit das Lösen der Abtasteinrichtung 2 reversibel.

## Patentansprüche

1. Positionsmesseinrichtung zur Bestimmung der Lage zweier relativ zueinander beweglicher Bauteile, mit
- einer entlang einer Messrichtung verlaufenden Messteilung,
- einem die Messteilung tragenden Trägerkörper (1)
- einer die Messteilung abtastenden Abtasteinrichtung (2) die in Messrichtung beweglich entlang des Trägerkörpers geführt ist,
- einem Montagefuß (20) der Abtasteinrichtung mit zugeordneten Befestigungsmitteln (26a, 26b) zur Befestigung der Abtasteinrichtung an einem der zueinander beweglichen Bauteile und
- einer Transportsicherung (3), mit der die Abtasteinrichtung in mindestens einer Transportposition an dem Trägerkörper festlegbar ist, so dass die Abtasteinrichtung in einer vorgebbaren Position - bezogen auf die Messrichtung - am Trägerkörper gehalten wird,
**dadurch gekennzeichnet,**
**dass** die Befestigungsmittel (26a, 26b), über die der Montagefuß (20) an einem der zueinander beweglichen Bauteile (M1, M2) befestigbar ist, derart mit der Transportsicherung (3) gekoppelt sind, dass
a) bei einer Betätigung der Befestigungsmittel (26a, 26b) zum Befestigen des Montagefußes (20) an dem einen Bauteil (M2) die Transportsicherung (3) gelöst wird und die Abtasteinrichtung (2) entlang der Messrichtung (V) bezüglich des Trägerkörpers (1) bewegbar ist und/oder
b) bei einer Betätigung der Befestigungsmittel (26a, 26b) zum Lösen der Befestigung des Montagefußes (20) an dem einen Bauteil (M2) die Transportsicherung (3) aktiviert wird und die Abtasteinrichtung am Trägerkörper (1) festgelegt ist.

2. Positionsmesseinrichtung nach Anspruch 1, **dadurch gekennzeichnet, dass** die Transportsicherung (3) derart ausgebildet und mit den Befestigungsmitteln (26a, 26b) des Montagefußes (20) gekoppelt ist, dass die Transportsicherung (3) gelöst wird und somit die Abtasteinrichtung (2) entlang der Messrichtung (V) bezüglich des Trägerkörpers (1) bewegbar ist, wenn die Befestigungsmittel (26a, 26b) zur Befestigung des Montagefußes (20) an dem einen Bauteil (M2) betätigt werden, und dass die Transportsicherung (3) aktiviert wird und somit die Abtasteinrichtung (2) am Trägerkörper (1) festgelegt ist, wenn die Befestigungsmittel (26a, 26b) zum Lösen der Befestigung des Montagefußes (20) an dem einen Bauteil (M2) betätigt werden.

3. Positionsmesseinrichtung nach Anspruch 1 oder 2, **dadurch gekennzeichnet, dass** die Transportsicherung (3) am Montagefuß (20) angeordnet ist.

4. Positionsmesseinrichtung nach Anspruch 3, **dadurch gekennzeichnet, dass** die Transportsicherung (3) verliersicher am Montagefuß (2) angeordnet ist.

5. Positionsmesseinrichtung nach Anspruch 3 oder 4, **dadurch gekennzeichnet, dass** die Transportsicherung (3) in einer Aufnahme (25) des Montagefußes (20) angeordnet ist.

6. Positionsmesseinrichtung nach einem der vorhergehenden Ansprüche, **dadurch gekennzeichnet, dass** die Transportsicherung (3) kraftschlüssig auf den Trägerkörper (1) einwirkt, wenn die Transportsicherung (3) aktiviert ist, um die Abtasteinrichtung (2) am Trägerkörper (1) festzulegen.

7. Positionsmesseinrichtung nach einem der vorhergehenden Ansprüche, **dadurch gekennzeichnet, dass** die Transportsicherung (3) eine Spannvorrichtung (33, 34, 35) aufweist, mittels der die Transportsicherung (3) am Trägerkörper (1) verspannbar ist.

8. Positionsmesseinrichtung nach Anspruch 7, **dadurch gekennzeichnet, dass** die Spannvorrichtung (33, 34, 35) zur Verspannung der Transportsicherung (3) in einer in Messrichtung (V) erstreckten Führungsnut (16) des Trägerkörpers (1) vorgesehen ist.

9. Positionsmesseinrichtung nach Anspruch 7 oder 8, **dadurch gekennzeichnet, dass** die Spannvorrichtung (33, 34, 35) mindestens ein vorgespanntes elastisches Element umfasst, welches die Spannvorrichtung (33, 34, 35) gegen den Trägerkörper (1) verspannt.

10. Positionsmesseinrichtung nach Anspruch 9, **dadurch gekennzeichnet, dass** das elastische Element (35) als mindestens ein Federelement ausgebildet sind.

11. Positionsmesseinrichtung nach Anspruch 9 oder 10, **dadurch gekennzeichnet, dass** das elastische Element (35) auf mindestens ein Krafteinleitungselement (33, 34) der Transportsicherung (3) einwirkt, so dass dieses gegen den Trärgekörper (1) gedrückt wird.

12. Positionsmesseinrichtung nach Anspruch 11, **dadurch gekennzeichnet, dass** das mindestens eine Krafteinleitungselement (33, 34) an einem schwenkbar gelagerten Verstellhebel (31, 32) vorgesehen ist.

13. Positionsmesseinrichtung nach Anspruch 11 oder 12, **dadurch gekennzeichnet, dass** zwei Krafteinleitungselemente (33, 34) vorgesehen sind, zwischen denen das elastische Element (35) aufgenommen ist und die mittels des elastischen Elementes (35) gegen den Trägerkörper (1) verspannt sind.

14. Positionsmesseinrichtung nach einem der Ansprüche 7 bis 13, **dadurch gekennzeichnet, dass** die Befestigungsmittel (26a, 26b) des Montagefußes (20) derart mit der Spannvorrichtung (33, 34, 35) gekoppelt sind, dass beim Betätigen der Befestigungsmittel (26a, 26b), um den Montagefuß (20) an dem einen Maschinenbauteil (M2) zu befestigen, die Spannvorrichtung (33, 34, 35) entgegen der Spannwirkung in einen Zustand überführt wird, in der sie nicht gegen den Trägerkörper (1) verspannt ist.

15. Positionsmesseinrichtung nach Anspruch 9 und 14, **dadurch gekennzeichnet, dass** die Einwirkung auf die Spannvorrichtung (33, 34, 35) unter Deformation des elastischen Elementes (35) erfolgt.

16. Positionsmesseinrichtung nach Anspruch 2 und Anspruch 14 oder 15, **dadurch gekennzeichnet, dass** die Befestigungsmittel (26a, 26b) des Montagefußes (20) derart mit der Spannvorrichtung (33, 34, 35) gekoppelt sind, dass bei Betätigung der Befestigungsmittel (26a, 26b), um den Montagefuß (20) wieder von dem einen Bauteil (M2) zu lösen, die Einwirkung auf die Spannvorrichtung (33, 34, 35) aufgehoben wird, so dass diese wieder gegen den Trägerkörper (1) verspannt ist.

17. Positionsmesseinrichtung nach einem der vorhergehenden Ansprüche, **dadurch gekennzeichnet, dass** ein Koppelmechanismus (4) vorgesehen ist, der eine Bewegung der Befestigungsmittel (26a, 26b) zur Befestigung des Montagefußes (20) an dem einen Bauteil (M1) in eine Einwirkung mindestens einer Komponente (42, 42a) des Koppelmechanismus (4) auf die Transportsicherung (3) umsetzt, die zu einem Lösen der Transportsicherung (3) führt.

18. Positionsmesseinrichtung nach einem der vorhergehenden Ansprüche, **dadurch gekennzeichnet, dass** die Befestigungsmittel (26a, 26b) mindestens ein Befestigungselement (26a) umfassen, das mit der Transportsicherung (3) gekoppelt ist.

19. Positionsmesseinrichtung nach Anspruch 18, **dadurch gekennzeichnet, dass** das Befestigungselement (26a) bei einer Betätigung längsbeweglich ist.

20. Positionsmesseinrichtung nach Anspruch 19, **dadurch gekennzeichnet, dass** das Befestigungselement (26a) als Befestigungsschraube ausgebildet ist.

21. Positionsmesseinrichtung nach Anspruch 17 und Anspruch 19 oder 20, **dadurch gekennzeichnet, dass** der Koppelmechanismus (4) mindestens ein Getriebeelement (41) zur Umsetzung der Längsbewegung des Betätigungselementes (26a) in eine Schwenkbewegung aufweist.

22. Positionsmesseinrichtung nach Anspruch 21, **dadurch gekennzeichnet, dass** das Getriebeelement (41) durch einen Schwenkhebel gebildet wird.

23. Positionsmesseinrichtung nach Anspruch 21 oder 22, **dadurch gekennzeichnet, dass** das Getriebeelement (41) ausgangsseitig mit einem drehbar gelagerten Element (42), insbesondere in Form einer Welle, verbunden ist, das auf die Transportsicherung (3) einwirkt, wenn das Getriebeelement (41) durch Betätigung des Befestigungselementes (26a) ausgelenkt wird.

24. Positionsmesseinrichtung nach Anspruch 7 und 23, **dadurch gekennzeichnet, dass** das drehbar gelagerte Element (42) auf die Spannvorrichtung (33, 34, 35) der Transportsicherung (3) einwirkt.

25. Positionsmesseinrichtung nach Anspruch 19 oder 20 und einem der Ansprüche 21 bis 24, **dadurch gekennzeichnet, dass** das Befestigungselement (26a) von einer Stellhülse (40) umschlossen ist, über die das Befestigungselement (26a) mit dem Getriebeelement (41) in Wirkverbindung steht.

## Claims

1. A position measuring device for determining the position of two components, which can be displaced relative to one another, comprising
- a measuring graduation running along a measuring direction,
- a support body (1) supporting the measuring graduation,
- a scanning device (2), which scans the measuring graduation and which is displaceably guided along the support body in measuring direction,
- an assembly base (20) of the scanning device comprising assigned fastening means (26a, 26b) for fastening the scanning device to one of the components, which are displaceable to one another and
- a transport securing means (3) by means of which the scanning device can be fixed to the support body in at least one transport position, so that the scanning device is maintained on the support body in a position, which can be predefined, in relation to the measuring direction,
**characterized in**
**that** the fastening means (26a, 26b), via which the assembly base (20) can be fastened to one of the components (M1, M2), which are displaceable to one another, are coupled to the transport securing means (3) in such a manner that
a) the transport securing means (3) is released in response to an actuation of the fastening means (26a, 26b) for fastening the assembly base (20) to the one component (M2) and the scanning device (2) can be displaced along the measuring direction (V) in relation to the support body (1) and/or
b) the transport securing means (3) is activated in response to an actuation of the fastening means (26a, 26b) for releasing the fastening of the assembly base (20) to the one component (M2) and the scanning device is fixed to the support body (1).

2. The position measuring device according to claim 1, **characterized in that** the transport securing means (3) is embodied and coupled to the fastening means (26a, 26b) of the assembly base (20) in such a manner that the transport securing means (3) and thus the scanning device (2) can be displaced along the measuring direction (V) in relation to the support body (1) when the fastening means (26a, 26b) for fastening the assembly base (20) on the one component (M2) are actuated and **in that** the transport securing means (3) is activated and the scanning device (2) is thus fixed to the support body (1) when the fastening means (26a, 26b) are actuated for releasing the fastening of the assembly base (20) to the one component (M2).

3. The position measuring device according to claim 1 or 2, **characterized in that** the transport securing means (3) is arranged on the assembly base (20).

4. The position measuring device according to claim 3, **characterized in that** the transport securing means (3) is arranged on the assembly base (20) in a loss-proof manner.

5. The position measuring device according to claim 3 or 4, **characterized in that** the transport securing means (3) is arranged in an accommodation (25) of the assembly base (20).

6. The position measuring device according to one of the preceding claims, **characterized in that** the transport securing means (3) impacts the support body (1) in a non-positive manner when the transport securing means (3) is activated for the purpose of fixing the scanning device (2) to the support body (1).

7. The position measuring device according to one of the preceding claims, **characterized in that** the transport securing means (3) encompasses a clamping device (33, 34, 35), by means of which the transport securing means (3) can be braced to the support body (1).

8. The position measuring device according to claim 7, **characterized in that** the clamping device (33, 34, 35) is provided for clamping the transport securing means (3) in a guide groove (16) of the support body (1), which extends in a measuring direction (V).

9. The position measuring device according to claim 7 or 8, **characterized in that** the clamping device (33, 34, 35) comprises at least one pretensioned elastic element, which clamps the clamping device (33, 34, 35) against the support body (1).

10. The position measuring device according to claim 9, **characterized in that** the elastic element (35) is embodied as at least one spring element.

11. The position measuring device according to claim 9 or 10, **characterized in that** the elastic element (35) acts on at least one force application element (33, 34) of the transport securing means (3), so that it is pressed against the support body (1).

12. The position measuring device according to claim 11, **characterized in that** the at least one force application element (33, 34) is provided at an adjusting lever (31, 32), which is supported so as to be capable of being rotated.

13. The position measuring device according to claim 11 or 12, **characterized in that** two force application elements (33, 34) are provided, between which the elastic element (35) is accommodated and which are clamped against the support body (1) by means of the elastic element (35).

14. The position measuring device according to one of claims 7 to 13, **characterized in that** the fastening means (26a, 26b) of the assembly base (20) are coupled to the clamping device (33, 34, 35) in such a manner that the clamping device (33, 34, 35) is transferred against the clamping effect into a state, in which it is not clamped against the support body (1) in response to the actuation of the fastening means (26a, 26b) for the purpose of fastening the assembly base (20) to the one machine component (M2).

15. The position measuring device according to claim 9 and 14, **characterized in that** the impact onto the clamping device (33, 34, 35) takes place under deformation of the elastic element (35).

16. The position measuring device according to claim 2 and claim 14 or 15, **characterized in that** the fastening means (26a, 26b) of the assembly base (20) are coupled to the clamping device (33, 34, 35) in such a manner that the impact onto the clamping device (33, 34, 35) is compensated for, so that it is again clamped against the support body (1) in response to the actuation of the fastening means (26a, 26b) for the purpose of again releasing the assembly base (20) from the one component (M2).

17. The position measuring device according to one of the preceding claims, **characterized in that** a coupling mechanism (4) is provided, which converts a motion of the fastening means (26a, 26b) for fastening the assembly base (20) to the one component (M1) into an impact of at least one component (42, 42a) of the coupling mechanism (4) onto the transport securing means (3), which leads to a release of the transport securing means (3).

18. The position measuring device according to one of the preceding claims, **characterized in that** the fastening means (26a, 26b) comprise at least one fastening element (26a), which is coupled to the transport securing means (3).

19. The position measuring device according to claim 18, **characterized in that** the fastening element (26a) can be moved in longitudinal direction in response to an actuation.

20. The position measuring device according to claim 19, **characterized in that** the fastening element (26a) is embodied as a fastening screw.

21. The position measuring device according to claim 17 and claim 19 or 20, **characterized in that** the coupling mechanism (4) encompasses at least one gear element (41) for converting the longitudinal motion of the actuating element (26a) into a pivoting motion.

22. The position measuring device according to claim 21, **characterized in that** the gear element (41) is formed by a lever.

23. The position measuring device according to claim 21 or 22, **characterized in that** the gear element (41) is connected on the output side to an element (42), which is supported so as to be capable of being rotated, in particular in the form of a shaft, which acts on the transport securing means (3) when the gear element (41) is moved by actuating the fastening element (26a).

24. The position measuring device according to claim 7 and 23, **characterized in that** the element (42), which is supported so as to be capable of being rotated, acts on the clamping device (33, 34, 35) of the transport securing means (3).

25. The position measuring device according to claim 19 or 20 and one of claims 21 to 24, **characterized in that** the fastening element (26a) is surrounded by an adjusting sleeve (40), via which the fastening element (26a) is actively connected to the gear element (41).

## Revendications

1. Dispositif de mesure de position pour la détermination de la position de deux pièces de construction mobiles l'une par rapport à l'autre, avec
- une graduation de mesure s'étendant le long d'un sens de mesurage,
- un corps de support (1) portant la graduation de mesure,
- un dispositif de balayage (2) balayant la graduation de mesure, qui est guidé de façon mobile dans le sens de mesurage, le long du corps de support,
- un pied de montage (20) du dispositif de balayage, avec des moyens de fixation attribués (26a, 26b), pour la fixation du dispositif de balayage sur l'une des pièces de construction mobiles l'une par rapport à l'autre, et
- une sécurité de transport (3), permettant de bloquer le dispositif de balayage dans au moins une position de transport sur le corps de support, de manière à maintenir le dispositif de balayage sur le corps de support dans une position prédéfinissable - par rapport au sens de mesurage,
**caractérisé en ce que**
les moyens de fixation (26a, 26b) permettant de fixer le pied de montage (20) sur l'une des pièces de construction (M1, M2) mobiles l'une par rapport à l'autre sont accouplés de telle manière avec la sécurité de transport (3), que
a) lors d'un actionnement des moyens de fixation (26a, 26b) pour la fixation du pied de montage (20) sur l'une des pièces de construction (M2), la sécurité de transport (3) est défaite, et le dispositif de balayage (2) peut être déplacé le long du sens de mesurage (V) par rapport au corps de support (1), et/ou
b) lors d'un actionnement des moyens de fixation (26a, 26b) pour défaire la fixation du pied de montage (20) sur l'une des pièces de construction (M2), la sécurité de transport (3) est activée et le dispositif de balayage est bloqué sur le corps de support (1).

2. Dispositif de mesure de position selon la revendication 1, **caractérisé en ce que** la sécurité de transport (3) est conçue et accouplée avec les moyens de fixation (26a, 26b) du pied de montage (20) de telle manière, que la sécurité de transport (3) est défaite, permettant ainsi au dispositif de balayage (2) de se déplacer le long du sens de mesurage (V) par rapport au corps de support (1), lorsque les moyens de fixation (26a, 26b) pour la fixation du pied de montage (20) sur l'une des pièces de construction (M2) sont actionnés, et que la sécurité de transport (3) est activée pour bloquer le dispositif de balayage (2) sur le corps de support (1), lorsque les moyens de fixation (26a, 26b) sont actionnés pour défaire la fixation du pied de montage (20) sur l'une des pièces de construction (M2).

3. Dispositif de mesure de position selon l'une des revendications 1 ou 2, **caractérisé en ce que** la sécurité de transport (3) est disposée sur le pied de montage (20).

4. Dispositif de mesure de position selon la revendication 3, **caractérisé en ce que** la sécurité de transport (3) est disposée sur le pied de montage (2) de manière à ne pas pouvoir être perdu.

5. Dispositif de mesure de position selon l'une des revendications 3 ou 4, **caractérisé en ce que** la sécurité de transport (3) est disposée dans une admission (25) du pied de montage (20).

6. Dispositif de mesure de position selon l'une des revendications précédentes, **caractérisé en ce que** la sécurité de transport (3) agit par blocage sur le corps de support (1), lorsque la sécurité de transport (3) est activée, pour bloquer le dispositif de balayage (2) sur le corps de support (1).

7. Dispositif de mesure de position selon l'une des revendications précédentes, **caractérisé en ce que** la sécurité de transport (3) comporte un dispositif de serrage (33, 34, 35), permettant de serrer la sécurité de transport (3) sur le corps de support (1).

8. Dispositif de mesure de position selon la revendication 7, **caractérisé en ce que** le dispositif de serrage (33, 34, 35) pour le serrage de la sécurité de transport (3) est prévu dans une rainure de guidage (16) du corps de support (1) s'étendant dans le sens de mesurage (V).

9. Dispositif de mesure de position selon l'une des revendications 7 ou 8, **caractérisé en ce que** le dispositif de serrage (33, 34, 35) comprend au moins un élément élastique précontraint, qui serre le dispositif de serrage (33, 34, 35) contre le corps de support (1).

10. Dispositif de mesure de position selon la revendication 9, **caractérisé en ce que** l'élément élastique (35) est conçu comme au moins un élément à ressort.

11. Dispositif de mesure de position selon l'une des revendications 9 ou 10, **caractérisé en ce que** l'élément élastique (35) agit sur au moins un élément d'introduction de force (33, 34) de la sécurité de transport (3), si bien que celui-ci est pressé contre le corps de support (1).

12. Dispositif de mesure de position selon la revendication 11, **caractérisé en ce que** l'au moins un élément d'introduction de force (33, 34) est prévu sur un levier de réglage (31, 32) monté de façon pivotante.

13. Dispositif de mesure de position selon l'une des revendications 11 ou 12, **caractérisé en ce qu'**il est prévu deux éléments d'introduction de force (33, 34), entre lesquels l'élément élastique (35) est admis et qui sont serrés contre le corps de support (1) au moyen des éléments élastiques (35).

14. Dispositif de mesure de position selon l'une des revendications 7 à 13, **caractérisé en ce que** les moyens de fixation (26a, 26b) du pied de montage (20) sont accouplés de telle manière avec le dispositif de serrage (33, 34, 35), que lors de l'actionnement des moyens de fixation (26a, 26b) pour la fixation du pied de montage (20) sur l'une des pièces de construction de machine (M2), le dispositif de serrage (33, 34, 35) est basculé contre l'effet de serrage, dans un état dans lequel il n'est pas serré contre le corps de support (1).

15. Dispositif de mesure de position selon les revendications 9 et 14, **caractérisé en ce que** l'effet sur le dispositif de serrage (33, 34, 35) est exercé par déformation de l'élément élastique (35).

16. Dispositif de mesure de position selon la revendication 2 et l'une des revendications 14 ou 15, **caractérisé en ce que** les moyens de fixation (26a, 26b) du pied de montage (20) sont accouplés de telle manière avec le dispositif de serrage (33, 34, 35), que lors de l'actionnement des moyens de fixation (26a, 26b) pour détacher à nouveau le pied de montage (20) de l'une des pièces de construction (M2), l'effet sur le dispositif de serrage (33, 34, 35) est supprimé, de sorte que celui-ci se retrouve à nouveau serré contre le corps de support (1).

17. Dispositif de mesure de position selon l'une des revendications précédentes, **caractérisé en ce qu'**il est prévu un mécanisme d'accouplement (4) permettant de convertir un mouvement des moyens de fixation (26a, 26b) pour la fixation du pied de montage (20) sur l'une des pièces de construction (M1) en un effet d'au moins un composant (42, 42a) du mécanisme d'accouplement (4) sur la sécurité de transport (3), provoquant ainsi un détachement de la sécurité de transport (3).

18. Dispositif de mesure de position selon l'une des revendications précédentes, **caractérisé en ce que** les moyens de fixation (26a, 26b) comprennent au moins un élément de fixation (26a), qui est accouplé avec la sécurité de transport (3).

19. Dispositif de mesure de position selon la revendication 18, **caractérisé en ce que** l'élément de fixation (26a) est déplaçable dans la longueur lors d'un actionnement.

20. Dispositif de mesure de position selon la revendication 19, **caractérisé en ce que** l'élément de fixation (26a) est conçu comme une vis de fixation.

21. Dispositif de mesure de position selon la revendication 17 et l'une des revendications 19 ou 20, **caractérisé en ce que** le mécanisme d'accouplement (4) comporte au moins un élément de transmission (41) pour la conversion du mouvement dans la longueur de l'élément d'actionnement (26a) en un mouvement de pivotement.

22. Dispositif de mesure de position selon la revendication 21, **caractérisé en ce que** l'élément de transmission (41) est formé par un levier pivotant.

23. Dispositif de mesure de position selon l'une des revendications 21 ou 22, **caractérisé en ce que** l'élément de transmission (41) est relié, du côté sortie, à un élément (42) monté de façon rotative, en particulier en forme d'arbre, agissant sur la sécurité de transport (3) lorsque l'élément de transmission (41) est dévié par l'actionnement de l'élément de fixation (26a).

24. Dispositif de mesure de position selon les revendications 7 et 23, **caractérisé en ce que** l'élément (42) monté de façon rotative agit sur le dispositif de serrage (33, 34, 35) de la sécurité de transport (3).

25. Dispositif de mesure de position selon l'une des revendications 19 ou 20 et l'une des revendications 21 à 24, **caractérisé en ce que** l'élément de fixation (26a) est entouré par une douille de réglage (40) permettant de mettre l'élément d'actionnement (26a) et l'élément de transmission (41) en liaison fonctionnelle.
